# EUROPEAN PATENT APPLICATION

(11) **EP 4 835 518 A2**
(43) Date of publication of application: **04.11.2026**
(21) Application number: 26199097.2
(22) Date of filing: 17.08.2026
(51) Int. Cl.: G01S 13/931, G01S 7/35, G01S 13/34

(54) **INPUT SIGNAL PROCESSING WITH SIGMA DELTA MODULATOR**

(71) Applicant: NXP B.V., 5656 AG Eindhoven (NL); Technische Universiteit Eindhoven, 5612 AE Eindhoven (NL)
(72) Inventor: Zhu, Zitao, 5656AG Eindhoven (NL); Ganzerli, Marcello, 5656AG Eindhoven (NL); Burdiek, Bernard, 5656AG Eindhoven (NL); Breems, Lucien Johannes, 5656AG Eindhoven (NL); Radulov, Georgi, 5656AG Eindhoven (NL)
(74) Representative: Colaiuda, Antonella

(57) **Abstract**

A device may include a transmitter module and a receiver module for radar signals. The receiver module includes a low-noise amplifier configured to output an amplified version of the analog input signal, and a sigma delta modulator configured to convert the amplified version of the analog input signal into a digital signal. The sigma delta modulator is configured to exhibit a frequency-dependent signal transfer function configured to reduce a magnitude of the interference signals that are processed by the sigma delta modulator. The device may include a controller configured to process the digital signal to determine a direction of arrival of the at least one object.

## Description

### FIELD

The present invention generally relates to signal processing, such as that performed by vehicle radar systems and, more specifically, to a sigma delta modulator configured to process received signals.

### BACKGROUND

A radar system transmits electromagnetic signals and receives back reflections of the transmitted signals. The time delay between the transmitted and received signals can be determined and used to calculate the distance and/or the speed of objects causing the reflections. For example, in automotive applications, automotive radar systems can be used to determine the distance and/or the speed of oncoming vehicles and other roadway obstacles.

Automotive radar systems enable the implementation of advanced driver-assistance system (ADAS) functions that are likely to enable increasingly safe driving and, eventually, fully autonomous driving platforms.

Received radar signals are processed through a signal processing chain that includes an analog-to-digital converter to convert the received analog reflection signals into digital signals suitable for processing. Before that conversion, however, the received signals are passed through various combinations of high-pass filters (to remove low-frequency interference signals) and variable gain amplifiers (VGAs) to increase the magnitude of received signals making them easier to process. Although these components are important to the received signal processing chain, the implementation of each individual component can introduce complexity to the radar system, increasing cost and reducing the overall efficiency of the system.

### SUMMARY

This summary section is neither intended to be, nor should be, construed as being representative of the full extent and scope of the present disclosure. Additional benefits, features and embodiments of the present disclosure are set forth in the attached figures and in the description hereinbelow, and as described by the claims. Accordingly, it should be understood that this Summary section may not contain all of the aspects and embodiments claimed herein.

Additionally, the disclosure herein is not meant to be limiting or restrictive in any manner. Moreover, the present disclosure is intended to provide an understanding to those of ordinary skill in the art of one or more representative embodiments supporting the claims. Thus, it is important that the claims be regarded as having a scope including constructions of various features of the present disclosure insofar as they do not depart from the scope of the methods and apparatuses consistent with the present disclosure (including the originally filed claims). Moreover, the present disclosure is intended to encompass and include obvious improvements and modifications of the present disclosure.

In some aspects, the techniques described herein relate to a radar system, including: a transmitter module configured to transmit a transmitted radar signal; a receiver module configured to receive reflections of the transmitted radar signal reflected by at least one object and to generate an analog input signal based on the received reflections, wherein the analog input signal includes signals of interest and interference signals, the receiver module including: a low-noise amplifier configured to output an amplified version of the analog input signal, and a sigma delta modulator configured to convert the amplified version of the analog input signal into a digital signal, wherein the sigma delta modulator is configured to exhibit a frequency-dependent signal transfer function configured to reduce a magnitude of the interference signals that are processed by the sigma delta modulator; and a controller configured to process the digital signal to determine a direction of arrival of the at least one object.

In some aspects, the techniques described herein relate to a system, including: a receiver module configured to receive an analog input signal; and a sigma delta modulator configured to convert the analog input signal into a digital signal, wherein the sigma delta modulator includes at least one of a feedback path and a feed-in path including a programmable coefficient and a value of the programmable coefficient is configured to cause the sigma delta modulator to exhibit a frequency-dependent signal transfer function.

In some aspects, the techniques described herein relate to a method, including: receiving an analog input signal; and converting the analog input signal into a digital signal using a sigma delta modulator configured to exhibit a frequency-dependent signal transfer function.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention.

In the drawings:
FIG. 1 depicts a simplified schematic block diagram of an automotive radar system that includes a radar unit connected to a radar controller processor.
FIG. 2 is a block diagram depicting a sigma delta modulator implemented with a programmable signal transfer function in which a frequency-dependent feedback path implements signal filtering and variable gain functionalities.
FIG. 3 is a graph depicting the frequency-dependent signal transfer function of the sigma delta modulator of FIG. 2.
FIG. 4 is a block diagram depicting a sigma delta modulator implemented with a programmable signal transfer function in which a frequency-dependent feed forward path implements signal filtering and variable gain functionalities.
FIG. 5 is a graph depicting the frequency-dependent signal transfer function of the sigma delta modulator of FIG. 4.
FIGS. 6-7 are graphs depicting simulation results for the present sigma delta modulator.

### DETAILED DESCRIPTION OF THE ILLUSTRATED EMBODIMENTS

The present invention generally relates to signal processing, such as that performed by vehicle radar systems and, more specifically, to a sigma delta modulator configured to process received signals. The present sigma delta modulator is configured to receive input analog signals and process those signals into an output digital signal. The sigma delta modulator can therefore be used in any application involving the processing of analog signals and, particularly, all analog-to-digital conversions that require low-frequency interference rejection.

In the present disclosure an example use case for the present sigma delta modulator is presented in which the modulator is used to process signals in a vehicle radar system. Specifically, the example involves the present sigma delta modulator being used to process analog signals derived from radar reflection signals received by the vehicle radar system.

Radar systems transmit electromagnetic signals and receive back reflections of the transmitted signals. In automotive applications, the environment of a vehicle can be relatively complex (due to many different types of radar reflecting objects), resulting in received signals that include various low-frequency interference signals.

To mitigate these challenges, existing radar systems implement a received signal processing chain that includes various combinations of high-pass filters (to balance interference in power and, consequently, reject interference) and variable gain amplifiers (VGAs) to increase the magnitude of received signals, making the received signals easier to process into digital signals. Although these components are important to the received signal processing chain, the implementation of each individual component can increase the complexity of the radar system, increasing cost and reducing the overall efficiency of the system.

In the present disclosure, many of the components of a radar system's receive signal processing chain are replaced with a single modulator (i.e., a sigma delta modulator) that is configured to implement the functionality of an analog-to-digital (ADC) converter, filters, and amplifiers.

In particular, the present sigma delta modulator may be configured to receive an analog input signal and process that signal using either a low-pass feedback loop that operates as an interference filter and signal amplifier or, alternatively, a high-pass feed-in structure that operates as a desired signal booster to provide those various functions of an input signal processing chain.

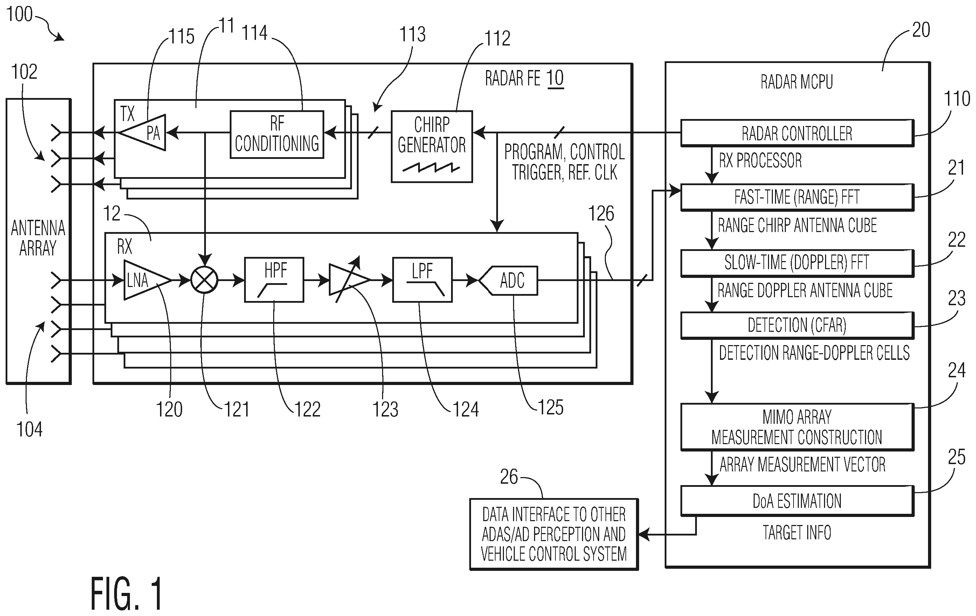

Before describing the specific implementation details of the present sigma delta modulator, an overview of a typical automotive radar system is provided. FIG. 1 depicts a simplified schematic block diagram of an automotive radar system 100 that includes a radar unit 10 connected to a radar controller processor 20. Radar system 100 may be implemented in integrated circuit form with the radar unit 10 and the radar controller processor 20 formed with separate integrated circuits (chips) or with a single chip, depending on the application.

Within radar system 100 each radar unit 10 includes one or more transmitting antenna elements 102 and receiving antenna elements 104 connected, respectively, to one or more radio frequency (RF) transmitter (TX) modules 11 and receiver (RX) modules 12. For example, each radar unit 10 is shown as including individual antenna elements 102, 104 (e.g., TX1,i, RX1,j) connected, respectively, to three transmitter modules 11 and four receiver modules 12, but these numbers are not limiting and other numbers are also possible, such as four transmitter modules 11 and six receiver modules 12, or a single transmitter module 11 and/or a single receiver module 12.

Each radar unit 10 also includes a chirp generator 112 that is configured and connected to supply a chirp input signal to the transmitter modules 11. To this end, the chirp generator 112 is connected to receive a separate and independent local oscillator (LO) signal and a chirp start trigger signal. The operation of transmitter modules 11 may be controlled by a controller 110 that may be implemented, in whole or in part, by processor 20. Chirp signals 113 are generated and transmitted to transmitter modules 11, usually following a pre-defined transmission schedule, where the chirp signals 113 are filtered at the RF conditioning module 114 and amplified at the power amplifier 115 before being fed to the corresponding transmit antenna element102 (TX1,i) and radiated.

The radar signal transmitted by the transmitter antenna elements 102 (TX1,i, TX2,i) may be reflected by an object, and part of the reflected radar signal reaches the receiver antenna elements 104 (RX1,i) at radar unit 10. At each receiver module 12, the received radio frequency antenna signal is amplified by a low noise amplifier (LNA) 120 and then fed to a mixer 121 where the received signal is mixed with the transmitted chirp signal generated by the RF conditioning module 114. The resulting intermediate frequency signal is fed to a first high-pass filter (HPF) 122. The resulting filtered signal is fed to a first variable gain amplifier 123 which amplifies the signal before feeding it to a first low-pass filter (LPF) 124. This re-filtered signal is fed to an analog/digital converter (ADC) 125 and is output by each receiver module 12 as a digital signal 126 (D1). The receiver module compresses object signal echoes of various delays into multiple sinusoidal tones whose frequencies correspond to the round-trip delay of the echo signal.

Radar system 100 includes radar controller processing unit 20 that is connected to supply input control signals to the radar unit 10 (e.g., via controller 110) and to receive therefrom digital output signals (e.g., digital signal 126) generated by the receiver modules 12.

In one or more embodiment, the radar controller processing unit 20 may be embodied as a micro-controller unit (MCU) or other processing unit that is configured and arranged for signal processing tasks such as, but not limited to, object identification, computation of object distance, object velocity, and object direction, and generating control signals. The radar controller processing unit 20 may, for example, be configured to generate calibration signals, receive data signals, receive sensor signals, generate frequency spectrum shaping signals (such as ramp generation in the case of frequency modulated continuous wave (FMCW) radar) and/or register programming or state machine signals for RF (radio frequency) circuit enablement sequences. In addition, the radar controller processor 20 may be configured to program the transmitter modules 11 to operate following a Multiple-Input Multiple-Output (MIMO) scheme, such as in a time-division fashion by sequentially transmitting chirps for coordinated communication between the transmit antenna elements 102 TX1,i, RX1,j; code-division fashion by transmitting orthogonally phase-coded chirp sequences from transmit antenna elements; or by Doppler-division fashion by transmitting linear-progression phase-coded chirp sequences from transmit antenna elements with designed offsets in their Doppler spectrums.

Radar controller processor 20 is configured to process digital signal 126 to ultimately identify a distance to detected objects as well as an angular position and velocity of those objects with respect to radar system 100. These data points can be output in the form of a point cloud, which identifies, in a three-dimensional space, the distance to detected objects as well as a confidence level for each object detection. Typically, digital signal 126 includes a sequence of digital values representing magnitudes of radar signals received by receiving antenna elements 104 captured over time. Typically, each digital value is associated with a particular chirp number and sample number.

FIG. 1 shows the series of signal processing steps that are implemented by processor 20 in order to properly process digital signal 126 received from radar unit 10 to identify potential nearby objects. The content of digital signals 126 is made up of a series of data frames that include a number of digital sample values (e.g., captured by ADCs 125 of receiver modules 12) where the sample values are arranged in a two-dimensional matrix that is generated based upon a sequence of pulsed signals. Processing of digital signals 126 may involve processing individual frames of data, as described herein, to identify sets of peak values within the frames. Or, alternatively and as described herein, this may involve processing different subsections of the ADC data stream to identify sets of candidate peak values, which are ultimately combined across an entire radar cube to perform final peak detection.

When processing such radar cube data, radar controller processor 20 initially performs a fast-time range Fast Fourier transform (FFT) 21 to generate new frame data. In particular, the FFT 21 is executed on the 1-D arrays of data (i.e., the signal) associated with each distinct chirp to generate a 1-D transformed signal of the same length. The FFTs of each chirp in the original input frame are combined to generate transformed frames, where this process is repeated for each frame associated with each receive channel. The resulting data frames, which represent range maps can be used to determine distance to particular objects as reflected in the range maps.

In a next step, radar controller processor 20 performs an additional Fast Fourier Transform (FFT) 22 (referred to as the slow-time or Doppler-FFT) on the range maps to generate a new range-Doppler frame data. In this step, however, FFT 22 is applied along the opposite dimension from the FFT 21. As such, the FFT 22 is executed on the 1-D arrays of data (i.e., the signal) in matrixes associated with each range bin to generate a transformed 1-D signal of the same length. The FFTs of each signal in the frames of matrixes are combined to generate the range-Doppler data frames, with this process being repeated for each frame associated with each receive channel. The range-Doppler data frames provide information about the movement of a potential object over time from one sample number to the next. With the data frames generated, it is possible to process the data encoded therein to begin identifying potential objects and, in the case of a detected object, determine its velocity and direction of arrival.

Accordingly, the radar controller processor 20 performs constant false alarm rate (CFAR) object detection 23. If a potential object has been detected, radar controller processor 20 performs multiple-input multiple-output (MIMO) array measurement construction 24 to determine the direction of arrival (DOA) for each object at step 25. The final object information dataset, which may include an object identifier, DOA, and other related information (e.g., object velocity) is then passed by radar controller processor 20 to an ADAS or other system configured to utilize the object information to control one or more vehicle system at step 26.

As shown in FIG. 1, the input signal processing chain of receiver module 12 includes several distinct components that are used to process received signals, including low-noise amplifier 120, high-pass filter 122, variable gain amplifier 123, low-pass filter 124, and ADC 125. As described, herein, an alternative modulator is provided that can replace the functionality of all or some of those components, potentially simplifying the implementation of receiver module 12 in an automotive radar system.

In FMCW radar systems, interference signals, such as those generated by bumper reflection, spill over and very close objects can lead to high-amplitude, but low-frequency interference tones or signals in the radar system's input signal processing chain. Existing solutions to these problems involve implementing combinations of variable (frequency) gain amplifiers and high-pass signal filters in an attempt to diminish those interference signals or tones.

Such variable gain amplifiers typically require the implementation of high-power operational amplifiers with high linearity requirements due to their open-loop structure.

These issues are mitigated through the present use of a sigma-delta modulator or loop filter in the place of such an operational amplifier. As described herein, because the present sigma delta modulator is configured to diminish those high-magnitude low-frequency interference signals, the resulting ADC is not required to have a spurious-free dynamic range (SFDR) that is great enough to cover the interference signals, while also providing adequate resolution. Additionally, the in-band desired signal magnitude signal input is reduced because the amplification stage is implemented within the modulator, further reducing requirements for linearity of the input impedance of the present modulator.

The present sigma delta modulator is an ADC that is configured to convert an input analog signal into an output digital bit stream. The sigma delta modulator is configured to, at a relatively high frequency, sample and convert that signal into an output bit stream (e.g., a pulse code modulated (PCM) signal), where the output bit stream provides a one-bit approximation of the input analog signal. That high-frequency bit stream can then be further processed (e.g., by filtering and decimation) to generate a usable output digital signal with a manageable number of samples.

Although in typical implementations sigma delta modulators are only used to provide such straightforward ADC functionality, in the present implementation, by manipulating either the feedback loop or feed-in path of the sigma delta modulator, the behavior of the modulator can be adjusted so as to additionally implement the functionality of various high-pass signal filters and variable gain amplifiers as part of the digitization operations of the sigma delta modulator, as described herein.

By providing that additional functionality within the sigma delta modulator, signal processing components, such as additional VGAs, and high- and low-pass filters, can be avoided, simplifying the input signal processing chain and reducing, for example, the number of components required to implement receiver module 12 of radar unit 10 of FIG. 1.

Conventionally, sigma delta modulators are implemented so as to provide a flat signal transfer function (STF), meaning that the modulator has a flat gain and that the input signal of the modulator and the output signal of the modulator have the same shape with no distortions at different signal frequencies. This is generally a preferred behavior of a sigma delta modulator when the modulator is used only in its capacity as an ADC.

In the present disclosure, however, a sigma delta modulator is provided in which the modulator is implemented with a programmable STF, enabling the STF to be adjusted to be frequency-dependent, thereby implementing a desired filter and signal amplification function. This enables the present sigma delta modulator to provide improved handling of low-frequency, high-power interference signals that may be present in a signal received by an automotive radar system as a result of vehicle bumper reflections and interference. Because the present sigma delta modulator has a non-fixed STF, frequency-dependent feedback and/or feedforward structures can be implemented to provide desired filtering and variable gain functionality.

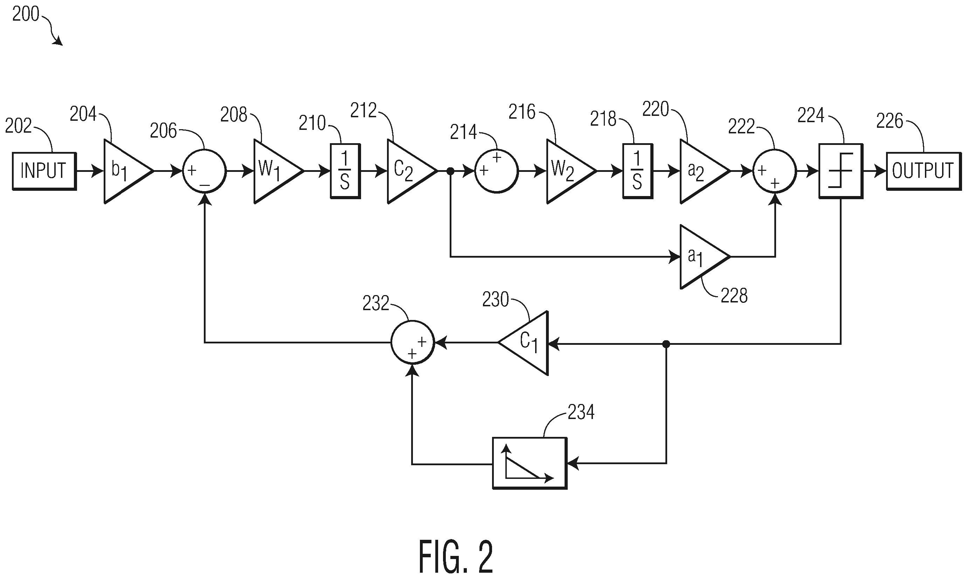

FIG. 2 is a block diagram depicting sigma delta modulator 200 implemented with a programmable STF in which a non-linear feedback path implements signal filtering and variable gain functionalities. In this example, sigma delta modulator 200 is a second order sigma delta modulator, but it would be apparent to a person of ordinary skill in the art that sigma delta modulator 200 could be implemented as a single order modulator or may have a higher than second order configuration.

Sigma delta modulator 200 includes input terminal 202 configured to receive an input analog signal. When incorporated into a radar system, input terminal 202 may be coupled to and can receive an analog signal from antenna elements 104 of radar system 100, for example, or low-noise amplifier 120 of receiver module 12.

Input terminal 202 is coupled to programmable input coefficient 204. Programmable input coefficient 204 has a multiplier or gain effect on the input signal received from input terminal 202 and so can provide a predetermined amount of gain to sigma delta modulator 200. In this disclosure, the coefficient value of programmable coefficients can be adjusted. Components referred to as just 'coefficients' are generally configured to apply a predetermined and fixed multiplier to an input signal. Coefficients having a value of, effectively, '1' may operate as signal buffers and may not modify a magnitude of a signal passing through such a coefficient. In various embodiments, components identified as coefficients could be replaced by programmable coefficients and vice versa, depending on the device configuration and application.

Programmable input coefficient 204 is connected to a positive input node of summing node 206. A second negative input node of summing node 206 receives as its input a signal from a feedback path of sigma delta modulator 200, described below.

The output of summing node 206, which is equal to the signal received from programmable input coefficient 204 minus the signal received from node 232 (described below), is passed through coefficient 208, integrator 210, and coefficient 212 to a positive input terminal of summing node 214. Integrator 210 operates to accumulate the received input signal over a sampling period and can operate to shift quantization noise (e.g., generated at quantizer 224, described below) into high frequency ranges, making the noise easier to isolate and remove from the signal being processed by sigma delta modulator 200.

The output of coefficient 212 represents the output of a first stage of sigma delta modulator 200. The second stage of sigma delta modulator 200 includes coefficient 216, which receives as an input the output of summing node 214. The output of coefficient 216 is passed through integrator 218, coefficient 220, and is passed to a positive input of summing node 222. The output of summing node 222 is passed to quantizer 224 and the output of quantizer 224 is passed to output terminal 226. The output generated at output terminal 226, therefore, is a digital signal approximation of the input signal received at input terminal 202. When incorporated into a radar system, for example, the output digital signal generated at output terminal 226 may be equivalent to the digital signal 126 generated by receiver module 12 of radar system 100 of FIG. 1.

As illustrated in FIG. 2, sigma delta modulator 200 includes an optional feed forward path in which the output of coefficient 212 is fed through programmable coefficient 228 into a positive input terminal of summing node 222. This path can form part of the loop filter that can operate to enhance filter stability.

Additionally, sigma delta modulator 200 includes a feedback path, in which the residual output of quantizer 224 (e.g., quantization error) is fed back through programmable coefficient 230 into a positive input terminal of summing node 232. Additionally, in parallel, the residual output of quantizer 224 is fed back through a low-pass filter 234 into another positive input terminal of summing node 232. Low-pass filter 234 is configured to allow signals having frequencies less than a threshold value (i.e., frequencies associated with interference signals) to pass through the low-pass filter and is configured to inhibit signals having frequencies greater than the threshold value (i.e., desired signals) from passing through the low-pass filter. The output of summing node 232, which is a signal including the sum of the output of programmable coefficient 230 and low-pass filter 234, is supplied as an input to a negative input terminal of summing node 206.

In this configuration, the feedback path of sigma delta modulator 200, due to the amplification of the feedback signal resulting from programmable coefficient 230 and the filtering implemented by low-pass filter 234, results in a low-frequency filtered version of the residual output of quantizer 224 being subtracted from the signal received at the positive input terminal of summing node 206 (i.e., an amplified version of the input signal received at input terminal 202). With low-pass filter 234 incorporated in the feedback path, sigma delta modulator 200 operates to remove low-frequency interference signals (e.g., that may result from bumper reflection interference) from the signal path of sigma delta modulator 200. In other words, the construction of the feedback path is effective to reduce the effect of low-frequency and high-amplitude unwanted signals that may be present in the input signals received from input terminal 202, a condition that can be prevalent in input signals received by an automotive radar system receiver.

In this configuration, the various coefficients of sigma delta modulator 200 of FIG. 2 can be tuned so that sigma delta modulator 200 exhibits a desired behavior of filtering low-frequency interference signals, while making full use of the dynamic range of sigma delta modulator 200 for encoding desired signals.

With reference to FIG. 2, at low frequencies (i.e., frequencies at which low-pass filter 234 is configured to allow signals to pass with no reduction of magnitude), the STF of sigma delta modulator 200 is largely determined by the ratio of values of programmable input coefficient 204 to programmable coefficient 230. Due to the operation of low-pass filter 234 in the feedback path of sigma delta modulator 200, the STF for sigma delta modulator 200 becomes frequency-dependent. As such, if the coefficient of programmable input coefficient 204 were to be set to a value of '1', for example, and the value of programmable coefficient 230 were to be set to the frequency-dependent value ${C}_{1} \left(s\right) = 0.1 + \frac{2 π {f}_{unity}}{s}$ and the value of coefficient 208 were set to a value of 10* w₁ (e.g., to offset the baseband value of C₁ being equal to 0.1), the STF of sigma delta modulator 200 becomes frequency-dependent and is configured to apply a signal boost to in-band signals (i.e., to provide in-band gain), while reducing the magnitude of out-of-band signals. Improving in-band gain using a frequency-depending STF in this way may be advantageous at least because doing so reduces the impact of clock jitter, quantization noise, and thermal noise on in-band signals, particularly for lower-magnitude in-band signals. Herein, "in-band" signals refer to signals having frequencies within a predefined operating frequency band, while "out-of-band" signals refer to signals having frequencies outside of the predefined operating frequency band.

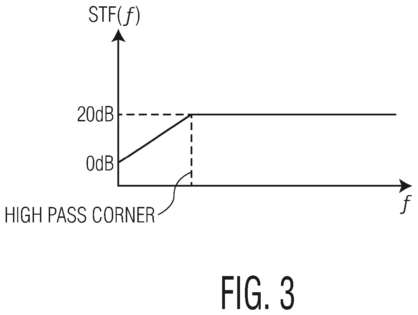

To illustrate, FIG. 3 is a graph depicting the frequency-dependent STF of sigma delta modulator 200. The horizontal axis represents frequency, while the vertical axis represents the STF value. As illustrated, at low frequencies (e.g., lower than the cutoff frequency of low-pass filter 234 of FIG. 2) the STF has lower values, resulting in signals at those lower frequencies being effectively removed from the signal path of sigma delta modulator 200. However, as frequency increases, the STF also increases until a high-pass frequency corner is reached. For signals at frequencies greater than that cutoff value (i.e., the desired signals), the STF is linear, as those frequencies represent the desired signal frequencies for sigma delta modulator 200.

Because only those desired signal frequencies are retained within the signal path of sigma delta modulator 200, the dynamic range of sigma delta modulator 200 is scaled in a frequency-dependent manner so that the signal being converted by sigma delta modulator 200 has the full dynamic range of sigma delta modulator 200 during conversion. This is an improvement over a conventional ADC in which, when processing a signal having a high-power interference element, the dynamic range of the conventional ADC must be high enough that the ADC will not be overloaded by the undesired interference signal, while the noise floor does not cover the in-band signal. As such, the dynamic range of a conventional ADC for processing a signal having a high-amplitude interference element would be:
${DR}_{conventional} = {P}_{INT , out of band} - NSD ∗ BW$

In the sigma delta modulator of the present disclosure, however, the full scale of the modulator is rendered frequency-dependent so that the dynamic range of the new sigma delta modulator is not consumed by the out-of-band interference. As such, the dynamic range of the present new sigma delta modulator is provided by the following expression:
${DR}_{new} = {P}_{SIG , in band} - NSD ∗ BW$

This allows for the desired input signal to be scaled across the full dynamic range of the present sigma delta modulator, which allows for a reduction of the noise contribution of the feedback path (e.g., quantization noise, clock jitter, and thermal noise of a digital-to-analog converter (DAC)) of the sigma-delta modulator.

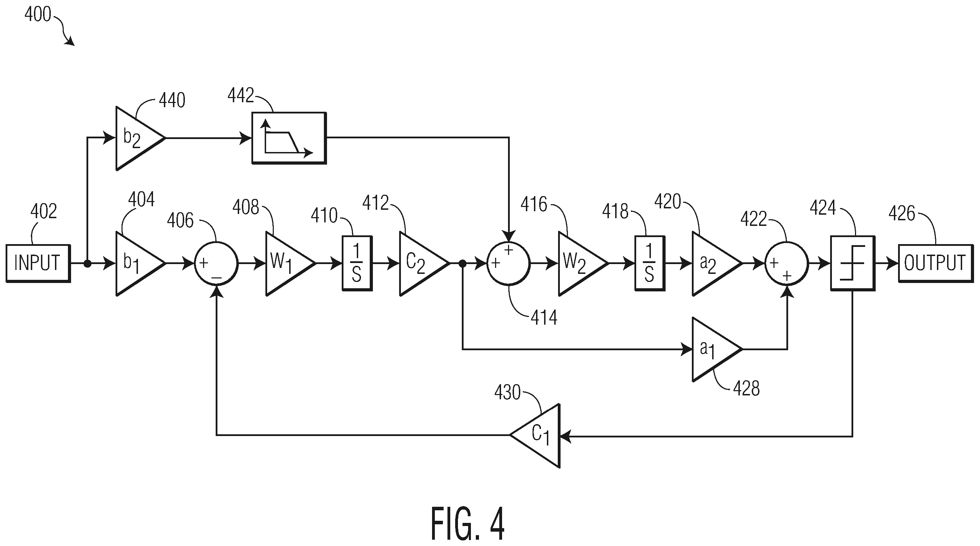

In an alternative embodiment, a frequency-dependent high-pass path may be implemented within the present sigma delta modulator to provide the desired frequency-dependent STF characteristics. To illustrate, FIG. 4 is a block diagram depicting sigma delta modulator 400 implemented with a programmable STF in which a non-linear feed-in path implements signal filtering and variable gain functionalities. In this example, sigma delta modulator 400 is a second order sigma delta modulator, but it would be apparent to a person of ordinary skill in the art that sigma delta modulator 400 could be implemented as a single order modulator or may have a higher than second order configuration.

Sigma delta modulator 400 includes input terminal 402 configured to receive an input analog signal. When incorporated into a radar system, input terminal 402 may be coupled to and can receive an analog signal from antenna elements 104 of radar system 100, for example, or low-noise amplifier 120 of receiver module 12.

Input terminal 402 is coupled to programmable input coefficient 404. Programmable input coefficient 404 has a multiplier or gain effect on the input signal received from input terminal 402 and so can provide a predetermined amount of gain to sigma delta modulator 400.

Programmable input coefficient 404 is connected to a positive input node of summing node 406. A second negative input node of summing node 406 receives as its input a signal from a feedback path of sigma delta modulator 400, described below.

The output of summing node 406 is passed through coefficient 408, integrator 410 and coefficient 412 to a positive input terminal of summing node 414. The output of coefficient 412 represents the output of the first stage of sigma delta modulator 400. The second stage of sigma delta modulator 400 includes coefficient 416, which receives as an input the output of summing node 414. The output of coefficient 416 is passed through integrator 418, coefficient 420, and is passed to a positive input of summing node 422. The output of summing node 422 is passed to quantizer 424 and the output of quantizer 424 is passed to output terminal 426. The output generated at output terminal 426, therefore, is a digital signal approximation of the input signal received at input terminal 402. When incorporated into a radar system, for example, the output digital signal generated at output terminal 426 may be equivalent to the digital signal 126 generated by receiver module 12 of radar system 100 of FIG. 1.

As illustrated in FIG. 4, sigma delta modulator 400 includes a feed-in path in which the input signal is passed through programmable coefficient 440 to low-pass filter 442. Low-pass filter 442 is configured to allow signals having frequencies less than a threshold value (i.e., signals associated with interference signals) to pass through the low-pass filter and is configured to inhibit signals having frequencies greater than the threshold value from passing through the low-pass filter. The output of low-pass filter 442 is fed into a positive input terminal of summing node 422.

Sigma delta modulator 400 includes a feed forward path in which the output of coefficient 412 (i.e., the first stage of sigma delta modulator 400) is fed to coefficient 428 and the output of coefficient 428 is fed into a positive input terminal of summing node 422.

Additionally, sigma delta modulator 400 includes a feedback path, in which the residual output of quantizer 424 is fed back through programmable coefficient 430 into a negative input of summing node 406.

By including low-pass filter 442 in the feed-in path, sigma delta modulator 400 operates to remove low-frequency interference signals (e.g., that may result from bumper reflection interference) from the signal path of sigma delta modulator 400. In other words, the construction of the feed forward path is effective to reduce the effect of low-frequency, high-amplitude noise signals that may be present in the input signals received from input terminal 402, a condition that can be prevalent in input signal received by an automotive radar system receiver.

In this configuration, the various coefficients of sigma delta modulator 400 of FIG. 4 can be selected so that sigma delta modulator 400 exhibits a desired behavior of filtering low-frequency interference signals, while making full use of the dynamic range of sigma delta modulator 400 for encoding desired signals.

In particular, with reference to the sigma delta modulator 400 of FIG. 4, in this configuration the feed-in path creates a "zero" (i.e., where the STF of sigma delta modulator 400 does not transmit a value) at a frequency determined by the expression $zero = 5 \frac{- {a}_{2} {b}_{1} {c}_{2} {w}_{1} {w}_{2}}{{a}_{1} {b}_{1} {c}_{2} {w}_{1} + {a}_{2} {b}_{2} {w}_{2}}$ . By selecting the appropriate component values, therefore, it is possible to specify a zero in the STF at a frequency that coincides with the frequency of strong interference signals (e.g., in the automotive radar context), thereby removing that interference from the signal path of sigma delta modulator 400. Additionally, by controlling the characteristics of low-pass filter 442, it is possible to determine the high pass corner of sigma delta modulator 400, so that signals over a particular frequency (e.g., a minimum frequency of signals of interest) are removed from the feed-in path of sigma delta modulator 400.

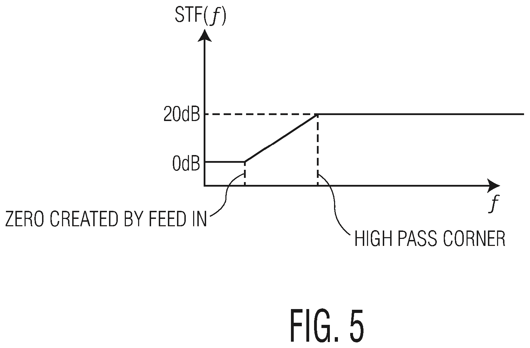

To illustrate, FIG. 5 is a graph depicting the frequency-dependent STF of sigma delta modulator 400. The horizontal axis represents frequency, while the vertical axis represents the STF value. As illustrated, at low frequencies the STF has a low value, resulting in signals at those frequencies being effectively removed from the signal path of sigma delta modulator 400. Above the zero point, determined by the coefficient values of sigma delta modulator 400, as described above, the STF value increases until a frequency at the high pass corner (e.g., determined by cutoff frequency of low-pass filter 442) is reached, at which point the STF becomes flat and does not increase with further frequency increases.

Accordingly, sigma delta modulator 400 is configured to, at low frequencies (e.g., associated with interference signals), attenuate the signal being processed, at mid-band frequencies (i.e., signals of interest), boost the desired signal, and at high frequencies (e.g., frequencies greater than frequencies of interest), saturate the gain of sigma delta modulator 400.

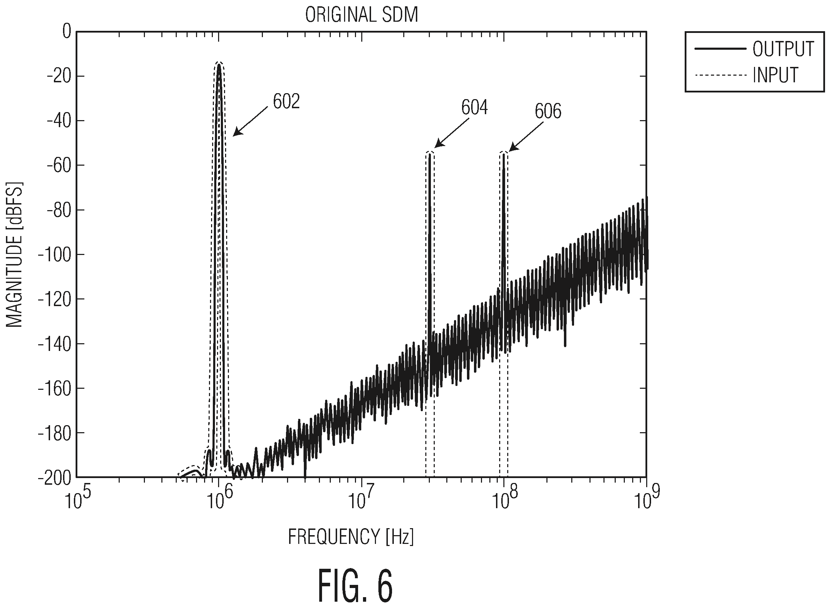

FIG. 6 is a chart depicting the signal processing output of a conventional radar signal processing chain. As shown in FIG. 6, the input signal includes a first peak 602, which represents a high-magnitude and low-frequency interference signal (e.g., bumper interference). The true signals are represented by peaks 604 and 606. After processing, the output signal of the conventional input signal processing chain includes peaks that match the input peaks in magnitude.

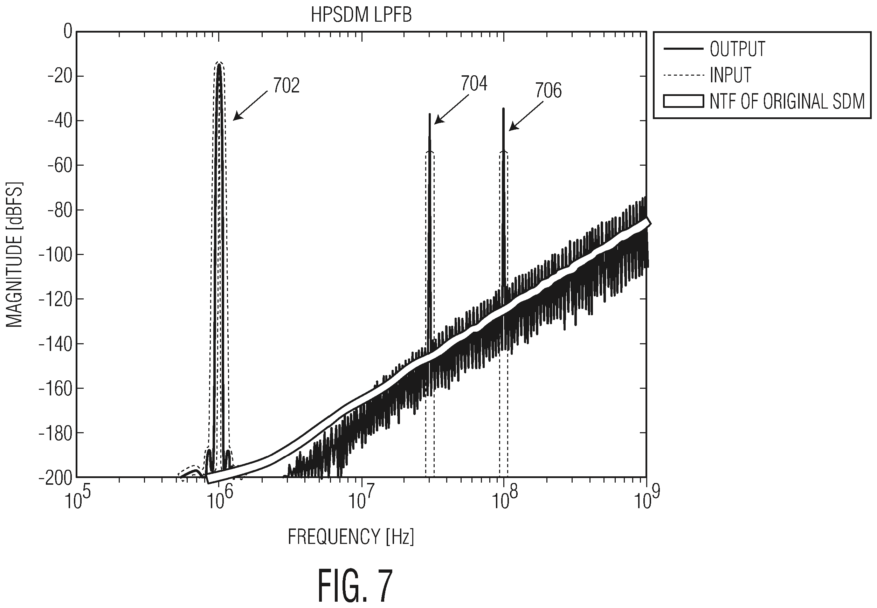

FIG. 7 is a chart depicting the signal processing output of a sigma delta modulator configured in accordance with the present disclosure when implemented as part of a radar signal processing chain. As shown in FIG. 7, the input signal includes a first peak 702, which represents a high-magnitude and low-frequency interference signal. The true signals are represented by peaks 704 and 706. After processing, the output signal of the sigma delta modulator includes a peak of reduced magnitude that coincides with the interference signal and boosted peaks that coincide with the desired signal.

In some aspects, the techniques described herein relate to a radar system, including: a transmitter module configured to transmit a transmitted radar signal; a receiver module configured to receive reflections of the transmitted radar signal reflected by at least one object and to generate an analog input signal based on the received reflections, wherein the analog input signal includes signals of interest and interference signals, the receiver module including: a low-noise amplifier configured to output an amplified version of the analog input signal, and a sigma delta modulator configured to convert the amplified version of the analog input signal into a digital signal, wherein the sigma delta modulator is configured to exhibit a frequency-dependent signal transfer function configured to reduce a magnitude of the interference signals that are processed by the sigma delta modulator; and a controller configured to process the digital signal to determine a direction of arrival of the at least one object.

In some aspects, the techniques described herein relate to a radar system, wherein the sigma delta modulator includes a feedback path that includes a low-pass filter and a programmable coefficient.

In some aspects, the techniques described herein relate to a radar system, wherein the low-pass filter and the programmable coefficient of the feedback path are connected in parallel between a residual output terminal of a quantizer of the sigma delta modulator and a negative input terminal of a summing node of the sigma delta modulator.

In some aspects, the techniques described herein relate to a radar system, wherein the low-pass filter is configured to allow signals having frequencies less than a threshold value to pass through the low-pass filter and is configured to inhibit signals having frequencies greater than the threshold value from passing through the low-pass filter.

In some aspects, the techniques described herein relate to a radar system, wherein the signals having frequencies less than the threshold value are associated with the interference signals.

In some aspects, the techniques described herein relate to a radar system, wherein the sigma delta modulator includes a feed-in path that includes a low-pass filter and a programmable coefficient.

In some aspects, the techniques described herein relate to a radar system, wherein the low-pass filter and the programmable coefficient of the feed-in path are connected in series between an input terminal of the sigma delta modulator and a positive input of a summing node of the sigma delta modulator.

In some aspects, the techniques described herein relate to a radar system, wherein the low-pass filter is configured to allow signals having frequencies less than a threshold value to pass through the low-pass filter and is configured to inhibit signals having frequencies greater than the threshold value from passing through the low-pass filter.

In some aspects, the techniques described herein relate to a radar system, wherein the signals having frequencies less than the threshold value are associated with the interference signals.

In some aspects, the techniques described herein relate to a system, including: a receiver module configured to receive an analog input signal; and a sigma delta modulator configured to convert the analog input signal into a digital signal, wherein the sigma delta modulator includes at least one of a feedback path and a feed-in path including a programmable coefficient and a value of the programmable coefficient is configured to cause the sigma delta modulator to exhibit a frequency-dependent signal transfer function.

In some aspects, the techniques described herein relate to a system, wherein when the sigma delta modulator includes the feedback path, the feedback path includes a low-pass filter and the programmable coefficient.

In some aspects, the techniques described herein relate to a system, wherein the low-pass filter and the programmable coefficient are connected in parallel between a residual output terminal of a quantizer of the sigma delta modulator and a negative input terminal of a summing node of the sigma delta modulator.

In some aspects, the techniques described herein relate to a system, wherein the low-pass filter is configured to allow signals having frequencies less than a threshold value to pass through the low-pass filter and is configured to inhibit signals having frequencies greater than the threshold value from passing through the low-pass filter.

In some aspects, the techniques described herein relate to a system, wherein, when the sigma delta modulator includes the feed-in path, the feed-in path includes a low-pass filter and the programmable coefficient.

In some aspects, the techniques described herein relate to a system, wherein the low-pass filter and the programmable coefficient are connected in series between an input terminal of the sigma delta modulator and a positive input of a summing node of the sigma delta modulator.

In some aspects, the techniques described herein relate to a system, wherein the low-pass filter is configured to allow signals having frequencies less than a threshold value to pass through the low-pass filter and is configured to inhibit signals having frequencies greater than the threshold value from passing through the low-pass filter.

In some aspects, the techniques described herein relate to a method, including: receiving an analog input signal; and converting the analog input signal into a digital signal using a sigma delta modulator configured to exhibit a frequency-dependent signal transfer function.

In some aspects, the techniques described herein relate to a method, further including providing a feedback path of the sigma delta modulator that includes a low-pass filter.

In some aspects, the techniques described herein relate to a method, further including configuring the feedback path to be connected between a residual output terminal of a quantizer of the sigma delta modulator and a negative input terminal of a summing node of the sigma delta modulator.

In some aspects, the techniques described herein relate to a method, further including configuring the low-pass filter to allow signals having frequencies less than a threshold value to pass through the low-pass filter and to inhibit signals having frequencies greater than the threshold value from passing through the low-pass filter.

As will be appreciated by one skilled in the art, aspects of the present disclosure may be embodied as a system, process, method, and/or program product. Accordingly, various aspects of the present disclosure may take the form of an entirely hardware embodiment, an entirely software embodiment (including firmware, resident software, microcode, etc.), or embodiments combining software and hardware aspects, which may generally be referred to herein as a "circuit," "circuitry," "module," or "system." Furthermore, aspects of the present disclosure may take the form of a program product embodied in one or more computer readable storage medium(s) having computer readable program code embodied thereon. (However, any combination of one or more computer readable medium(s) may be utilized. The computer readable medium may be a computer readable signal medium or a computer readable storage medium.)

A computer readable storage medium may be, for example, but not limited to, an electronic, magnetic, optical, electromagnetic, infrared, biologic, atomic, or semiconductor system, apparatus, controller, or device, or any suitable combination of the foregoing, wherein the computer readable storage medium is not a transitory signal per se. More specific examples (a non-exhaustive list) of the computer readable storage medium may include the following: an electrical connection having one or more wires, a portable computer diskette, a hard disk, a random access memory ("RAM"), a read-only memory ("ROM"), an erasable programmable read-only memory ("EPROM" or flash memory), an optical fiber, a portable compact disc read-only memory ("CD-ROM"), an optical storage device, a magnetic storage device, or any suitable combination of the foregoing. In the context of this document, a computer readable storage medium may be any tangible medium that can contain or store a program for use by or in connection with an instruction execution system, apparatus, controller, or device. Program code embodied on a computer readable signal medium may be transmitted using any appropriate medium, including but not limited to wireless, wire line, optical fiber cable, RF, etc., or any suitable combination of the foregoing.

A computer readable signal medium may include a propagated data signal with computer readable program code embodied therein, for example, in baseband or as part of a carrier wave. Such a propagated signal may take any of a variety of forms, including, but not limited to, electro-magnetic, optical, or any suitable combination thereof. A computer readable signal medium may be any computer readable medium that is not a computer readable storage medium and that can communicate, propagate, or transport a program for use by or in connection with an instruction execution system, apparatus, controller, or device.

The block diagrams in the figures illustrate architecture, functionality, and operation of possible implementations of circuitry, systems, methods, processes, and program products according to various embodiments of the present disclosure. In this regard, certain blocks in the block diagrams may represent a module, segment, or portion of code, which includes one or more executable program instructions for implementing the specified logical function(s). It should also be noted that, in some implementations, the functions noted in the blocks may occur out of the order noted in the figures. For example, two blocks shown in succession may, in fact, be executed substantially concurrently, or the blocks may sometimes be executed in the reverse order, depending upon the functionality involved.

Modules implemented in software for execution by various types of processors may, for instance, include one or more physical or logical blocks of computer instructions, which may, for instance, be organized as an object, procedure, or function. Nevertheless, the executables of an identified module need not be physically located together, but may include disparate instructions stored in different locations which, when joined logically together, include the module, and achieve the stated purpose for the module. Indeed, a module of executable code may be a single instruction, or many instructions, and may even be distributed over several different code segments, among different programs, and across several memory devices. Similarly, operational data (e.g., knowledge bases of adapted weights and/or biases described herein) may be identified and illustrated herein within modules, and may be embodied in any suitable form and organized within any suitable type of data structure. The operational data may be collected as a single data set, or may be distributed over different locations including over different storage devices. The data may provide electronic signals on a system or network.

These program instructions may be provided to one or more processors and/or controller(s) of a general-purpose computer, special purpose computer, or other programmable data processing apparatus (e.g., controller) to produce a machine, such that the instructions, which execute via the processor(s) of the computer or other programmable data processing apparatus, create circuitry or means for implementing the functions/acts specified in the block diagram block or blocks.

It will also be noted that each block of the block diagrams, and combinations of blocks in the block diagrams, can be implemented by special purpose hardware-based systems (e.g., which may include one or more graphics processing units) that perform the specified functions or acts, or combinations of special purpose hardware and computer instructions. For example, a module may be implemented as a hardware circuit including custom VLSI circuits or gate arrays, off-the-shelf semiconductors such as logic chips, transistors, controllers, or other discrete components. A module may also be implemented in programmable hardware devices such as field programmable gate arrays, programmable array logic, programmable logic devices, application specific ICs, microcontrollers, systems on a chip, general purpose processors, microprocessors, or the like.

These program instructions may also be stored in a computer readable storage medium that can direct a computer system, other programmable data processing apparatus, controller, or other devices to function in a particular manner, such that the instructions stored in the computer readable medium produce an article of manufacture including instructions which implement the functions/acts specified in the block diagram block or blocks.

The program instructions may also be loaded onto a computer, other programmable data processing apparatus, controller, or other devices to cause a series of operational steps to be performed on the computer, other programmable apparatus or other devices to produce a computer implemented process such that the instructions which execute on the computer, other programmable apparatus, or other devices provide processes for implementing the functions/acts specified in the block diagram block or blocks.

The preceding detailed description is merely illustrative in nature and is not intended to limit the embodiments of the subject matter or the application and uses of such embodiments.

As used herein, the word "exemplary" means "serving as an example, instance, or illustration." Any implementation described herein as exemplary is not necessarily to be construed as preferred or advantageous over other implementations. Furthermore, there is no intention to be bound by any expressed or implied theory presented in the preceding technical field, background, or detailed description.

The connecting lines shown in the various figures contained herein are intended to represent exemplary functional relationships and/or physical couplings between the various elements. It should be noted that many alternative or additional functional relationships or physical connections may be present in an embodiment of the subject matter. In addition, certain terminology may also be used herein for the purpose of reference only, and thus are not intended to be limiting, and the terms "first", "second" and other such numerical terms referring to structures do not imply a sequence or order unless clearly indicated by the context.

As used herein, a "node" means any internal or external reference point, connection point, junction, signal line, conductive element, or the like, at which a given signal, logic level, voltage, data pattern, current, or quantity is present. Furthermore, two or more nodes may be realized by one physical element (and two or more signals can be multiplexed, modulated, or otherwise distinguished even though received or output at a common node).

The foregoing description refers to elements or nodes or features being "connected" or "coupled" together. As used herein, unless expressly stated otherwise, "connected" means that one element is directly joined to (or directly communicates with) another element, and not necessarily mechanically. Likewise, unless expressly stated otherwise, "coupled" means that one element is directly or indirectly joined to (or directly or indirectly communicates with, electrically or otherwise) another element, and not necessarily mechanically. Thus, although the schematic shown in the figures depict one exemplary arrangement of elements, additional intervening elements, devices, features, or components may be present in an embodiment of the depicted subject matter.

While at least one exemplary embodiment has been presented in the foregoing detailed description, it should be appreciated that a vast number of variations exist. It should also be appreciated that the exemplary embodiment or embodiments described herein are not intended to limit the scope, applicability, or configuration of the claimed subject matter in any way. Rather, the foregoing detailed description will provide those skilled in the art with a convenient road map for implementing the described embodiment or embodiments. It should be understood that various changes can be made in the function and arrangement of elements without departing from the scope defined by the claims, which includes known equivalents and foreseeable equivalents at the time of filing this patent application.

## Claims

1. A radar system, comprising:
a transmitter module configured to transmit a transmitted radar signal;
a receiver module configured to receive reflections of the transmitted radar signal reflected by at least one object and to generate an analog input signal based on the received reflections, wherein the analog input signal includes signals of interest and interference signals, the receiver module including:
a low-noise amplifier configured to output an amplified version of the analog input signal, and
a sigma delta modulator configured to convert the amplified version of the analog input signal into a digital signal, wherein the sigma delta modulator includes a programmable coefficient set to a value to configure the sigma delta modulator to exhibit a frequency-dependent signal transfer function configured to reduce a magnitude of the interference signals that are processed by the sigma delta modulator; and
a controller configured to process the digital signal to determine a direction of arrival of the at least one object.

2. The radar system of claim 1, wherein the sigma delta modulator includes a feedback path that includes a low-pass filter and a programmable coefficient.

3. The radar system of claim 2, wherein the low-pass filter and the programmable coefficient of the feedback path are connected in parallel between a residual output terminal of a quantizer of the sigma delta modulator and a negative input terminal of a summing node of the sigma delta modulator.

4. The radar system of claim 2, wherein the low-pass filter is configured to allow signals having frequencies less than a threshold value to pass through the low-pass filter and is configured to inhibit signals having frequencies greater than the threshold value from passing through the low-pass filter.

5. The radar system of claim 4, wherein the signals having frequencies less than the threshold value are associated with the interference signals.

6. The radar system of claim 1, wherein the sigma delta modulator includes a feed-in path that includes a low-pass filter and a programmable coefficient.

7. The radar system of claim 6, wherein the low-pass filter and the programmable coefficient of the feed-in path are connected in series between an input terminal of the sigma delta modulator and a positive input of a summing node of the sigma delta modulator.

8. The radar system of claim 6, wherein the low-pass filter is configured to allow signals having frequencies less than a threshold value to pass through the low-pass filter and is configured to inhibit signals having frequencies greater than the threshold value from passing through the low-pass filter.

9. The radar system of claim 8, wherein the signals having frequencies less than the threshold value are associated with the interference signals.

10. A method, comprising:
providing a sigma delta modulator configured to convert an analog input signal into a digital, wherein the sigma delta modulator includes a programmable coefficient;
setting the programmable coefficient to a value to configure the sigma delta modulator to exhibit a frequency-dependent signal transfer function configured to reduce a magnitude of interference signals that are processed by the sigma delta modulator;
receiving the analog input signal; and
converting the analog input signal into the digital signal using a sigma delta modulator.

11. The method of claim 10, further comprising providing a feedback path of the sigma delta modulator that includes a low-pass filter and the programmable coefficient, the low-pass filter connected in parallel with the programmable coefficient.

12. The method of claim 11, further comprising configuring the feedback path to be connected between a residual output terminal of a quantizer of the sigma delta modulator and a negative input terminal of a summing node of the sigma delta modulator.

13. The method of claim 11, further comprising configuring the low-pass filter to allow signals having frequencies less than a threshold value to pass through the low-pass filter and to inhibit signals having frequencies greater than the threshold value from passing through the low-pass filter.
